# FASCICULE DE BREVET EUROPEEN

(11) **EP 0 687 229 B1**
(45) Date de publication et mention de la délivrance du brevet: **13.11.1996**
(21) Numéro de dépôt: 94907604.6
(22) Date de dépôt: 22.02.1994
(51) Int. Cl.: B60T 7/12, B60T 13/66, B60T 13/565, B60T 13/569

(54) **DISPOSITIF DE FREINAGE ASSISTE A COMMANDE AUTOMATIQUE SIMPLIFIEE**
HILFSKRAFTBREMSVORRICHTUNG MIT VEREINFACHTER AUTOMATISCHER STEUERUNG
POWER BRAKING DEVICE WITH SIMPLIFIED AUTOMATIC CONTROL

(30) Priorité: 10.03.1993 FR 9302743
(43) Date de publication de la demande: 20.12.1995
(73) Titulaire: ALLIEDSIGNAL EUROPE SERVICES TECHNIQUES S.A., 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(74) Mandataire: Bentz, Jean-Paul
(86) Numéro de dépôt international: FR9400193
(87) Numéro de publication internationale: WO9420343

(56) Documents cités:
- EP-A- 0 347 583
- DE-A- 2 021 287
- DE-A- 3 112 343

## Description

La présente invention concerne un dispositif de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance propre à exercer ladite force d'actionnement sur le piston hydraulique principal et comportant une enveloppe rigide séparée par au moins une cloison mobile étanche en au moins deux chambres dont la première au moins est susceptible d'être sélectivement soumise à une première pression au moins voisine de celle qui règne dans la seconde chambre, ou à une seconde pression différente de la première, au moyen de l'un au moins de deux organes de communication sélective comprenant une électrovalve et un clapet commandé par application de ladite force d'entrée sur une tige de commande, ladite cloison mobile étant susceptible d'être sollicitée par une différence de pression entre les deux chambres pour entraîner un piston pneumatique mobile par rapport à l'enveloppe et portant ledit clapet.

Des dispositifs de ce type sont connus dans l'art antérieur et des exemples en sont donnés par les documents EP- A2 -0 171 585 et EP 0 347 583.

De tels dispositifs de freinage présentent l'intérêt potentiel, résultant de l'utilisation d'une électrovalve, de pouvoir être actionnés de façon automatique par un signal électrique sans aucune intervention du conducteur, par exemple en cas de détection d'une situation requérant le freinage immédiat du véhicule ou des roues.

Cependant les dispositifs de ce type n'ont jusqu'à présent connu que peu d'applications, en raison essentiellement de leur coût encore trop élevé et de la réticence des utilisateurs à voir un dispositif automatique enfoncer à leur place la pédale de freinage.

La présente invention se situe dans ce contexte, et a pour but de proposer un dispositif de freinage assisté susceptible d'être commandé automatiquement, mais néanmoins de conception simple, peu coûteuse et respectant les réflexes habituels des utilisateurs.

A cette fin, le dispositif de la présente invention est essentiellement caractérisé en ce que le piston hydraulique principal du maître-cylindre comporte lui-même un cylindre mobile, creux, qui communique avec le maître-cylindre, qui coopère avec la cloison mobile pour recevoir une première partie au moins de la force d'assistance communiquée par cette dernière, et à l'intérieur duquel coulisse, de façon étanche et suivant la direction axiale, un piston hydraulique secondaire susceptible de recevoir au moins ladite force d'entrée en provenance de la tige de commande, en ce que la cloison mobile est montée coulissante sur le piston pneumatique de manière à pouvoir coulisser par rapport à lui, sur une course prédéterminée, en direction du maître-cylindre, depuis une position relative initiale dans laquelle elle est en butée contre le piston pneumatique suivant une direction opposée à celle qui pointe vers le maître-cylindre jusqu'à une position finale dans laquelle cette cloison mobile peut entraîner le cylindre mobile en direction du maître-cylindre.

Par ailleurs, il est possible de prévoir que le clapet soit sollicité à la fermeture par un ressort et isole les deux chambres l'une de l'autre en l'absence de force d'entrée.

Selon un mode de réalisation préféré de l'invention, le dispositif comporte en outre un disque de réaction en contact avec le piston pneumatique et propre à transmettre au piston hydraulique secondaire une seconde partie de la force d'assistance en provenance du piston pneumatique.

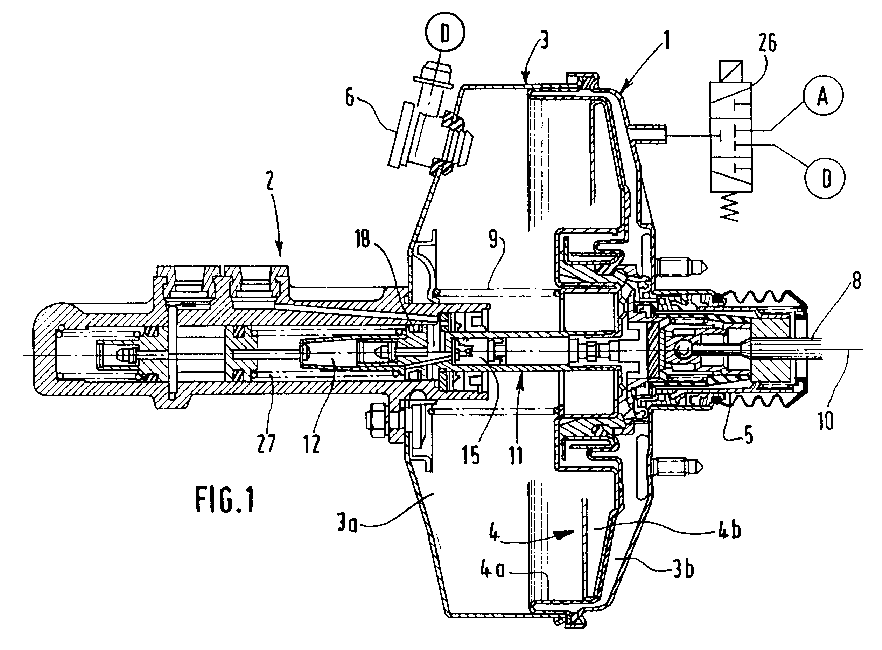

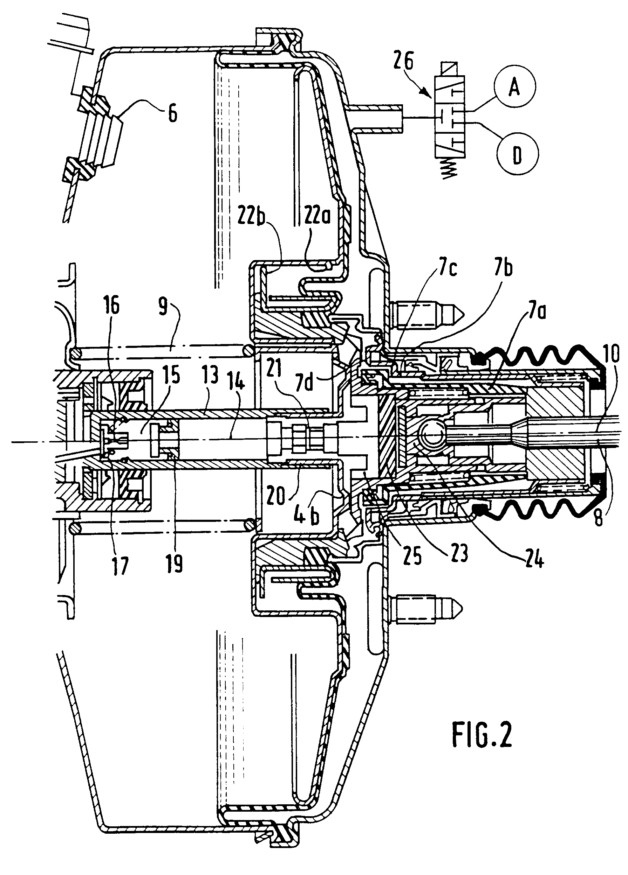

D'autres caractéristiques et avantages de l'invention ressortiront clairement de la description qui en est faite ci-après, à titre indicatif et nullement limitatif, en référence à la figure 1, qui est une vue en coupe d'un dispositif conforme à l'invention, et à la figure 2, qui représente un détail agrandi de la figure 1.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 comprenant une membrane 4a et une jupe rigide 4b et susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression D à travers une valve anti-retour 6.

La pression dans la chambre arrière 3b est contrôlée par un clapet 7 (figure 2), commandé par une tige de commande 8, laquelle est reliée à une pédale de frein (non représentée).

Le clapet 7, qui est par exemple du type décrit dans le document EP-A1-0 509 867, peut se trouver sollicité à la fermeture par au moins un ressort de manière à isoler l'une de l'autre les deux chambres 3a et 3b aussi longtemps que la tige de commande ne reçoit aucune force d'entrée.

En l'occurrence, le clapet 7 comprend une douille 7a, un support annulaire 7b et deux organes d'obturation annulaires 7c et 7d, le premier organe d'obturation 7c contrôlant la communication entre la chambre arrière 3b et l'atmosphère, et le second organe d'obturation 7d contrôlant la communication entre les deux chambres 3a et 3b.

En position de repos du servomoteur, le support annulaire 7b se trouve repoussé contre la paroi de la chambre arrière 3b (vers la droite) par le piston pneumatique 5 qui reçoit la force d'un ressort 9, et par la jupe 4b qui reçoit la force d'un ressort 27 intégré au maître-cylindre 2, la douille 7a étant elle-même repoussée vers la droite contre l'organe d'obturation annulaire 7c, qu'elle ferme.

Dans ces conditions, le second organe d'obturation 7d se trouve lui-même appliqué contre le piston pneumatique 5, dans une position pour laquelle il interdit la communication entre les chambres 3a et 3b.

Lorsque la tige de commande 8 est en position de repos, en l'occurrence tirée vers la droite, et en dépit du fait que les chambres 3a et 3b ne communiquent plus, le clapet 7 vient d'un état dans lequel il établissait une communication entre les deux chambres 3a et 3b du servomoteur, de sorte que les pressions régnant dans ces chambres sont égales ou très voisines.

La chambre arrière 3b étant ainsi soumise à la même dépression D que la chambre avant 3a, le piston 5 est repoussé vers la droite, en position de repos, par le ressort 9.

Dans cet état du servomoteur, l'actionnement de la tige de commande 8 vers la gauche a pour effet de déplacer le clapet 7 de façon qu'il ouvre la chambre arrière 3b à la pression atmosphérique.

La différence de pression entre les deux chambres, alors ressentie par la membrane 4a, exerce sur la cloison mobile 4 une poussée qui tend à la déplacer vers la gauche et à lui permettre normalement d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant l'axe 10 de la tige de poussée 8 en direction du maître-cylindre 2, et se conjuguent pour constituer la force d'actionnement de ce dernier.

Plus précisément, la force d'actionnement est appliquée sur le piston hydraulique principal 11 du maître-cylindre et en provoque le déplacement vers la gauche (sur la figure) , ce qui entraîne une élévation de pression du liquide de freinage présent dans le volume intérieur 12 du maître-cylindre, et un actionnement du frein relié à ce dernier.

Dans le cas de l'invention, le piston hydraulique principal 11 est en fait composite et comprend d'une part le cylindre 13 mobile et creux, déjà évoqué, et d'autre part un piston hydraulique secondaire 14.

Le volume intérieur 15 du cylindre mobile 13 communique avec le volume intérieur 12 du maître-cylindre par l'intermédiaire d'au moins un orifice, tel que 16, ménagé dans le cylindre mobile suivant une direction axiale, et d'au moins un clapet anti-retour, tel que 17, n'autorisant la circulation de fluide de freinage qu'en provenance de l'intérieur 12 du maître-cylindre vers l'intérieur 15 du cylindre mobile 13.

En dehors du passage de fluide que permettent le passage 16 et le clapet 17 entre le volume intérieur 12 du maître-cylindre 2 et celui du cylindre mobile 13, ce cylindre mobile 13 coulisse de façon étanche dans le maître-cylindre 2, l'étanchéité étant obtenue grâce au moins à un joint annulaire 18.

Le piston hydraulique secondaire 14, quant à lui, coulisse à l'intérieur du cylindre mobile 13, qu'il obture de façon étanche grâce à un joint annulaire 19.

Le cylindre mobile 13 est relié, à travers une liaison 20, à la jupe rigide 4b de manière à recevoir une partie de la force d'assistance exercée par l'intermédiaire de cette jupe.

Le piston hydraulique secondaire 14 est en fait constitué par le prolongement axial d'une tige de poussée 21 susceptible de lui transmettre d'une part la force d'entrée exercée sur la tige de commande 8 et d'autre part une fraction de la force d'assistance développée par le piston pneumatique 5, ces forces étant transmises, de façon en soi connue, par l'intermédiaire d'un disque de réaction 23 sur une face duquel s'appuient ce piston pneumatique et un palpeur 24 actionné par la tige de commande, et dont l'autre face s'appuie sur une coupelle 25 solidaire de la tige de poussée 21.

Le fonctionnement du dispositif décrit jusqu'à présent est le suivant.

Lorsqu'une force d'entrée est appliquée sur la tige de commande 8, le piston hydraulique secondaire 14 est sollicité vers la gauche, tendant à augmenter la pression dans le maître-cylindre.

Après une course prédéterminée de la tige de poussée 8, le clapet 7 ouvre à l'atmosphère la chambre arrière 3b du servomoteur, préalablement isolée de la chambre avant 3a, et une force d'assistance est appliquée au cylindre mobile 13 par la jupe rigide 4b.

La pression hydraulique dans le volume interne 12 du maître-cylindre s'élève de façon nette et s'établit, par circulation de fluide hydraulique à travers le passage 16 et le clapet anti-retour 17, dans le volume interne 15 du cylindre mobile, faisant ainsi apparaître, sur le piston hydraulique secondaire 14, une force de réaction dépendant de la force d'assistance, s'opposant à la force transmise à travers le disque de réaction 23, et permettant le contrôle de la force d'assistance par la force d'entrée.

Selon une caractéristique de l'invention, la cloison mobile 4 est, de préférence par l'intermédiaire de sa jupe rigide 4b, montée coulissante sur le piston pneumatique 5 et peut coulisser par rapport à lui en direction du maître-cylindre 2.

Plus précisément, le coulissement relatif s'effectue depuis une position de repos correspondant à la position de repos du servomoteur, telle que représentée sur la figure 1 et dans laquelle la jupe 4b vient en butée contre le piston pneumatique 5 sous l'effet au moins du ressort de rappel 27 du maître-cylindre 2 suivant une direction opposée à celle qui pointe vers le maître-cylindre 2, jusqu'à une position dans laquelle la jupe 4b entraîne le piston pneumatique 5 vers le maître-cylindre.

Pour ce faire, la jupe 4b et le piston pneumatique 5 présentent par exemple des butées respectives 22a, 22b, en regard l'une de l'autre, permettant à la jupe 4b de n'entraîner le piston pneumatique 5 qu'après une course prédéterminée correspondant à la distance séparant ces butées au repos.

Par ailleurs, le servomoteur comprend une électrovalve 26, à au moins deux voies, permettant de raccorder la chambre arrière 3b du servomoteur à la pression atmosphérique au moins.

De préférence, comme représenté, l'électrovalve 26 est une électrovalve à trois voies, permettant de raccorder de manière sélective la chambre arrière 3b soit à la source de dépression D, soit à l'atmosphère A.

Grâce à ces caractéristiques, l'électrovalve 26 peut raccorder directement à la chambre arrière à l'atmosphère et provoquer le freinage de façon automatique, sans qu'il soit besoin de prévoir des moyens particuliers pour conserver par ailleurs le fonctionnement normal du servomoteur, sans que l'apparition du freinage automatique soit conditionnée par une action de freinage préalable par le conducteur, et sans que la pédale de frein ne subisse de mouvement gênant, puisque le mouvement de la jupe provoque un freinage avant que le piston pneumatique 5, auquel la pédale est reliée à travers la tige de commande 8, ne soit entraîné.

Après une action de freinage automatique, l'électrovalve 26 est de préférence commandée de manière à raccorder la chambre arrière 3b à la source de dépression, et rétablir ainsi la situation antérieure au freinage.

## Revendications

1. Dispositif de freinage assisté pour véhicule à moteur, comprenant d'une part un maître-cylindre (2) rempli d'un fluide de freinage et équipé d'un piston hydraulique principal (11) destiné à recevoir une force d'actionnement se composant d'une force d'entrée et d'une force d'assistance agissant toutes deux suivant une direction axiale, et d'autre part un servomoteur pneumatique d'assistance (1) propre à exercer ladite force d'actionnement sur le piston hydraulique principal et comportant une enveloppe rigide (3) séparée par au moins une cloison mobile étanche (4) en au moins deux chambres (3a, 3b) dont la première (3b) au moins est susceptible d'être sélectivement raccordée à des première et seconde sources de pression (A, D) délivrant des première et seconde pressions respectives, dont la seconde est au moins voisine de celle qui règne dans la seconde chambre, grâce à l'un au moins de deux organes de communication sélective comprenant une électrovalve (26) et un clapet (7) commandé par application de ladite force d'entrée sur une tige de commande (8), ladite cloison mobile (4) étant susceptible d'être sollicitée par une différence de pression entre les deux chambres pour entraîner un piston pneumatique (5), mobile par rapport à l'enveloppe et portant ledit clapet, caractérisé en ce que le piston hydraulique principal du maître-cylindre comporte lui-même un cylindre mobile (13), creux, qui communique avec le maître-cylindre, qui coopère avec la cloison mobile (4) pour recevoir une première partie au moins de la force d'assistance communiquée par cette dernière, et à l'intérieur duquel coulisse, de façon étanche et suivant la direction axiale, un piston hydraulique secondaire (14) susceptible de recevoir au moins ladite force d'entrée en provenance de la tige de commande (8), en ce que la cloison mobile (4) est montée coulissante sur le piston pneumatique (5) de manière à pouvoir coulisser par rapport à lui, sur une course prédéterminée, en direction du maître-cylindre, depuis une position relative initiale dans laquelle elle est en butée contre le piston pneumatique suivant une direction opposée à celle qui pointe vers le maître-cylindre jusqu'à une position finale dans laquelle cette cloison mobile peut entraîner le cylindre mobile (13) en direction du maître-cylindre.

2. Dispositif suivant la revendication 1, caractérisé en ce que le clapet (7) est sollicité à la fermeture par un ressort (27) et isole les deux chambres l'une de l'autre en l'absence de force d'entrée.

3. Dispositif de freinage suivant la revendication 1 ou 2, caractérisé en ce qu'il comporte en outre un disque de réaction (23) en contact avec ledit piston pneumatique (5) et propre à transmettre au piston hydraulique secondaire (14) une seconde partie de la force d'assistance en provenance du piston pneumatique.

## Claims

1. Boosted braking device for a motor vehicle comprising, on the one hand, a master cylinder (2) filled with a brake fluid and equipped with a main hydraulic piston (11) intended to receive an actuating force composed of an input force and of a boost force both acting in an axial direction and, on the other hand, a pneumatic booster (1) suitable for exerting said actuating force on the main hydraulic piston and including a rigid casing (3) separated by at least one sealed movable partition (4) into at least two chambers (3a, 3b) the first (3b) of which at least is capable of being connected selectively to first and second pressure sources (A, D) delivering first and second respective pressures, the second of which is at least close to that which prevails in the second chamber, by virtue of at least one of two selective communication members comprising a solenoid valve (26) and a valve (7) controlled by the application of said input force on a control rod (8), said movable partition (4) being capable of being forced by a pressure difference between the two chambers in order to entrain a pneumatic piston (5) which can be moved with respect to the casing and carries said valve, characterized in that the main hydraulic piston of the master cylinder itself includes a hollow movable cylinder (13) which communicates with the master cylinder, which interacts with the movable partition (4) so as to receive at least a first part of the boost force communicated via the latter, and inside which there slides, in a sealed fashion and in the axial direction, a secondary hydraulic piston (14) capable of receiving at least the said input force coming from the control rod (8), in that the movable partition (4) is mounted slidingly on the pneumatic piston (5) so as to be able to slide with respect to it over a predetermined stroke towards the master cylinder from an initial relative position in which it is in abutment against the pneumatic piston in a direction opposite to the one which points towards the master cylinder as far as a final position in which this movable partition may entrain the movable cylinder (13) towards the master cylinder.

2. Device according to Claim 1, characterized in that the valve (7) is forced closed by a spring (27) and isolates the two chambers from one another in the absence of an input force.

3. Braking device according to Claim 1 or 2, characterized in that it further includes a reaction disk (23) in contact with said pneumatic piston (5) and suitable for transmitting to the secondary hydraulic piston (14) a second part of the boost force coming from the pneumatic piston.

## Patentansprüche

1. Servobremsvorrichtung für ein Kraftfahrzeug, mit zum einen einem Hauptzylinder (2), der mit einem Bremsfluid gefüllt und mit einem Hydraulikhauptkolben (11) versehen ist, der dafür vorgesehen ist, eine Betätigungskraft aufzunehmen, die sich aus einer Eingangskraft und einer Unterstützungskraft zusammensetzt, die beide entlang einer axialen Richtung wirken, und zum anderen einem pneumatischen Unterstützungs-Servomotor (1), der die Betätigungskraft auf den Hydraulikhauptkolben ausüben kann und ein starres Gehäuse (3) aufweist, das durch wenigstens eine bewegbare dichte Trennwand (4) in wenigstens zwei Kammern (3a, 3b) unterteilt ist, von denen wenigstens die erste (3b) selektiv mit einer ersten und einer zweiten Unterdruckquelle (A, D), die einen ersten bzw. einen zweiten Druck liefern, wobei der zweite Druck wenigstens in der Nähe des in der zweiten Kammer herrschenden Drucks liegt, mittels wenigstens einem von zwei Organen zum selektiven Verbinden verbunden werden können, die ein Elektroventil (26) und ein Ventilelement (7) aufweisen, das durch das Aufbringen der Eingangskraft auf die Steuerstange (8) gesteuert wird, wobei die bewegbare Trennwand (4) von einer Druckdifferenz zwischen den beiden Kammern beaufschlagt werden kann, um einen Pneumatikkolben (5) anzutreiben, der bezüglich des Gehäuses beweglich ist und das Ventilelement trägt, dadurch gekennzeichnet, daß der Hydraulikhauptkolben des Hauptzylinders wiederum einen bewegbaren hohlen Zylinder (13) aufweist, der mit dem Hauptzylinder in Verbindung steht, mit der bewegbaren Trennwand (4) zusammenwirkt, um wenigstens einen ersten Teil der Unterstützungskraft aufzunehmen, die von dieser Trennwand übermittelt wird, und in dessen Innerem in dichter Weise entlang der axialen Richtung ein Hydrauliksekundärkolben (14) gleitet, der wenigstens die von der Steuerstange (8) stammende Eingangskraft aufnehmen kann, daß die bewegbare Trennwand (4) verschiebbar an dem Pneumatikkolben (5) angebracht ist, so daß sie relativ zu diesem über einen vorbestimmten Weg in Richtung des Hauptzylinders aus einer Ausgangsrelativstellung, in der sie an dem Pneumatikkolben anliegt, entlang einer zur Richtung zum Hauptzylinder entgegengesetzten Richtung bis in eine Endstellung bewegt werden kann, in der diese bewegbare Trennwand den bewegbaren Zylinder (13) in der Richtung des Hauptzylinders antreiben kann.

2. Vorrichtung nach Anspruch 1, dadurch gekennzeichnet, daß das Ventilelement durch eine Feder (27) in Richtung des Schließens beaufschlagt ist und beim Fehlen einer Eingangskraft die beiden Kammern voneinander isoliert.

3. Bremsvorrichtung nach Anspruch 1 oder Anspruch 2, dadurch gekennzeichnet, daß sie außerdem eine Reaktionsscheibe (23) aufweist, die den Pneumatikkolben (5) berührt und auf den Hydrauliksekundärkolben (14) einen zweiten Teil der von dem Pneumatikkolben stammenden Unterstützungskraft übertragen kann.
